# EUROPEAN PATENT APPLICATION

(11) **EP 0 544 744 A1**
(43) Date of publication of application: **09.06.1993**
(21) Application number: 91915002.9
(22) Date of filing: 26.06.1991
(51) Int. Cl.: C01B 13/10, C01B 13/11, C02F 1/78

(54) **OZONIZED WATER GENERATOR FOR STERILIZATION AND OZONOTHERAPY**

(30) Priority: 25.06.1991 ES 9101503
(71) Applicant: SAITRA, S.A., E-46870 Onteniente (ES)
(72) Inventor: LLORET GIMENEZ, Encarnacion, E-46870 Onteniente (ES)
(74) Representative: De Arpe Fernandez, Manuel
(86) International application number: ES9100038
(87) International publication number: WO9300291

(57) **Abstract**

The ozonized water generator for sterilization and ozonotherapy is comprised of a generator, a high voltage current tap, a transformer, the generator being mounted between two caps (11), one of them with a conduit for the entry of air for the dryer (7), the ozone gas coming out of the conduit at the opposite cap, the ozone being conducted to the inlet point through the ventury accelerator, which receives the water from the conduit, with pressure controller, of automatic actuation or manually actuated electrovalve of the switch, passing through the bridge conduit, in order to obtain the water-ozone mixture, within the accelerator, the latter being protected by a filled external tube in order to maintain its permeability, a triatomic mixture of water and ozone being produced within the accelerator, breaking molecularly the water in order to obtain its homogeneous fusion. The generator is housed in the cylindrical receptacle in order to avoid contacting the high voltage connections.

## Description

The following is a descriptive memory of an invention patent for an ozonized water generator for sterilization and ozonotherapy.

The present invention offers considerable innovation and improvement with respect to previous inventions of ozone equipment and generators found in the state of the art.

To be more precise, it should be pointed out that the present invention introduces considerable innovations to previous patents of the same holder, such as invention patents 8602462 and 8902089.

The hereto referred ionized water generator for sterilization and ozonotherapy is particularly recommended for use in catering, medicine and for household use.

Specifically, ozonized water destroys the germs and mould found on the surfaces of perishable goods, and which, after washing with ozonized water, become completely aseptic. They are then in perfect condition to be stored in refrigerators or to be prepared directly for consumption. It is equally recommendable for human consumption due to its desinfection and oxygenation properties and, at the same time, to its deglutition, since its high oxygen content tends to reduce excess fat (cholesterol) and crystals (uric acid) in the human body.

Special mention should be made of its use in clinics and hospitals for washing and personal hygiene of patients, and in the general hygiene of floors, toilets, worktops, etc. In the case of hospitals and clinics, it should be underlined that the ozonized water generator for sterilization and ozonotherapy can incorporate an outlet for medicinal oxygen, thus making it a perfect aid in aseptic rooms to obtain total sterilization both of surgical material and of the hands in post-operatory procedures.

The type of ozonotherapy where the hereto referred ozonized water generator is used, offers unlimited possibilities in the fields of hygiene, asepsy and nutrition. In fact, due to its high oxygen content, when ozonized water is consumed by human beings, a greater and purer intake of oxygen is obtained which takes the form of oxyhaemoglobin in the blood corpuscles, this being a fundamental factor in the assimilation of food and moreso in the elimination of waste products from the organism.

Essentially, the ozonized water generator for sterilization and ozonotherapy hereto referred acts by mixing ozone and water, for which purpose it is equipped with one or more circular chambers to obtain the ozone which, once mixed with water from the supply, gives ozonized water suitable for sterilizing any type of object.

The actual ozone generator, as such, is formed by one or more stainless steel pipes, the measurements and diameters of which may vary, with caps or insulating plugs fitted at their ends to store the ozone generated in the interior. The ozone produced by means of an electrical discharge on a steel sheet or grid rolled up inside the pipe or generator, or on filaments, is sent to the walls of the generator, forming a chamber of ozone gas.

In the interior of the generator, or generators, there is a further hollow tempered-glass ("pyrex" type) cylinder whose function is to dielectrically distribute the ozone produced by the electrical discharge in a regular way throughout the chamber.

The ozone obtained, which is accumulated in the chamber of the generator or generators, is absorbed by the effect of the venturi, i.e. by a venturi pipe, characterized by the fact that its section varies continually and where the velocity of the water is in inverse proportion to same. The considerable absorption effect of this system means an acceleration of the water, producing at the same time, a triatomic mixture of water and ozone, since the venturi tube and the effect produced by it tend to molecularly separate the water, achieving a homogeneous fusion of water and ozone. This is precisely one of the outstanding features of the present invention.

The ozone generator can be equipped with several concentric multiple chambers to obtain ozonized water for sterilization purposes. This variant consists of several quartz pipes, of different diameters, connected concentrically and joined at the ends to insulating blocks with housing for the ends, leaving surrounding chambers between the pipes. These can act as air chambers for the production of ozone and can be flooded with water for, refrigeration purposes and can even act as conductors by means of a metallic grid, water, graphite or any other material with suitable properties. In this way, a large amount of ozone is produced to be mixed with drinking water from the supply to obtain treated water. The mixture is produced in the accelerator mechanism, a venturi pipe, installed for this purpose and connected to a hydraulic and electric circuit.

The generator, in whatever form , is equipped with a manual starting switch which activates an electrovalve to permit the intake of water.

The intake of water to the venturi pipe circuit, where the mixture with the ozone takes place, can be equipped with an internal electric contact. A further electric contact is found at the outlet for the water-ozone mix from the venturi pipe, so that the actual waterflow establishes the circuit by conductivity, thus the entire generator circuit starts working automatically.

Special mention should be given to the case where an ozonized water generator is used in a shower installation, either in hospitals, clinics or private homes. In this case, due to the limitations and prohibitions imposed by the corresponding regulations in Spain and specifically by those concerning high and low tension equipment, the installation should be regulated to function without any direct participation by the user and should have a pressosotat incorporated so that when the tap is turned on and a determined amount of pressure acts on the pressostat, the whole generator circuit will automatically start functioning.

The ozonized water generator for sterilization and ozonotherapy, hereto referred, introduces improvements and innovations on previous patents of the same holder, such as number 8602462 and 8902089.

To be specific, the technological and electronic innovations developed and incorporated by the present invention for an ozonized water generator for sterilization and ozonotherapy are as follows:
1.-Central Control Unit.
2.-Antifuse Blockage Unit.
3.-Water counterpressure detection unit.
4.-Interactive elements supervision unit.
5.-Ozone concentration regulation unit. (03).
6.- Optional ozone concentration digital measuring unit. (03).
7.- No-return safety valve.

Briefly, the features of the aforementioned technological and electronic innovations are as follows:
1.-CENTRAL CONTROL UNIT. Unites all electronic devices which make up the system.
2.-ANTIFUSE BLOCKAGE UNIT. An experimentally developed electronic device whose specific mission is basically the detection of intensities between 10 and 300 mA, thereby making its response in the case of a shortcircuit 30 times faster than the safety fuse installed in the ozone generating equipment. In this way, double electric protection is ensured.
3.- COUNTERPRESSURE DETECTION UNIT. This device detects the flow of water from the counterpressure at the tap outlet of the equipment and responds by means of an electronic blockage signal. The anomaly is indicated by a red led found on the front outer part of the equipment. To release the signal produced by the detection of the flow of water , the equipment is reconnected and the membrane keys designed for that purpose are pressed for a few seconds, at the desired level.
4.-INTERACTIVE ELEMENTS SUPERVISION UNIT. An electronic device which controls and supervises the correct functioning of all the elements that make up the equipment, such as the electrovalve, generators, etc. Any anomaly that might take place is detected and visualized and the entire electronic system is disconnected.
5.-OZONE CONCENTRATION REGULATION UNIT.
   A device which controls the concentration of the ozone generated by the equipment and which ensures that determined levels are obtained depending on the application.
6.- DIGITAL MEASURING UNIT OF OZONE CONCENTRATION. Optional extra in the equipment, this device is placed on the outside front part of the equipment and indicates instantly the concentration of the ozone produced and the selected level.
7.-NO-RETURN SAFETY VALVE. This device prevents the flow of water which through counterpression, could flood the conduit which is the outlet for the ozone produced in the generator.

As well as the aforementioned electronic innovations, further mention should be given to an innovation of a basically electromechanical nature, namely, the receptacle, box or cylindrical metal hood, which contains the generator in its interior, either in the form of a single pipe or in its variant of concentric multiple chambers.

The importance of the innovation introduced by this box or hollow cylindrical deposit is none other than to avoid the user or any worker touching the high tension cables which are connected to the ozone generator and which, in future, will remain inside the box or cylindrical deposit, completely out of reach or contact by the user. This represents an important innovation, particularly in the field of safety and prevention.

Essentially, the ozonized water generator for sterilizatioin and ozonotherapy hereto referred consists in a combined electric and hydraulic circuit, comprising an intake commutator or pressostat; one or several individual circular generators for obtaining ozone; a high tension wave generator; a dryer or filter for the intake of air to the generators. The water comes from from the electrovalve or pressostat through a distributor, and the mixture of water-ozone is a result of the separation of the water molecules caused by the acceleration effect of the venturi tube and lastly, a jet or spray for the outlet of treated water for use.

On the whole, the innovative function defined by the ozonized water generator for sterilization and ozonotherapy lies in that it solves the previous technique of ozonization, which took place by injecting the ozone obtained by conventional means into the waterflow, using a compressor and likewise, by means of contact towers and again using a compressor. All of these methods have shown that a mixture of the desired quality was not achieved, since no molecular separation of the water took place, the triatomic mixture of the water and ozone was not achieved.

To understand more fully the general features and components of the ozonized water generator for sterilization and ozonotherapy hereto referred, please refer to the enclosed drawings where a practical case of an ozonized water generator for sterilization and ozonotherapy is shown. It should be underlined that, given the global informative nature of the enclosed drawings, the figures and elements therein should be examined with an open mind.

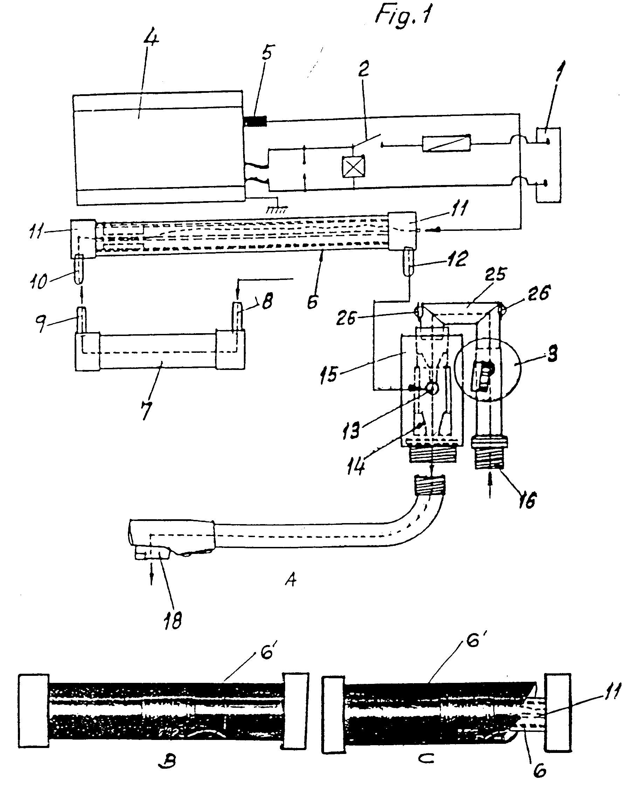

On illustration 1 of the drawing, we can see Figure 1 which includes three views A, B and C. View A shows the general functioning scheme of the ozonized water generator for sterilization and ozonotherapy, which in this case, comprises a high tension transformer, an ozone generator, a dryer or air filter, an accelerator mechanism or Venturi pipe, a pressostat mechanism and the outlet jet for the water-ozone mix. View B shows the hollow metal cylindrical receptacle which houses the ozone generator in its interior and whose main function is to keep the high tension cables of the generator totally insulated, thereby avoiding any chance contact by a person with them.

View C shows a cut of the inside arrangement of the metal cylindrical receptacle where the ozone generator is housed.

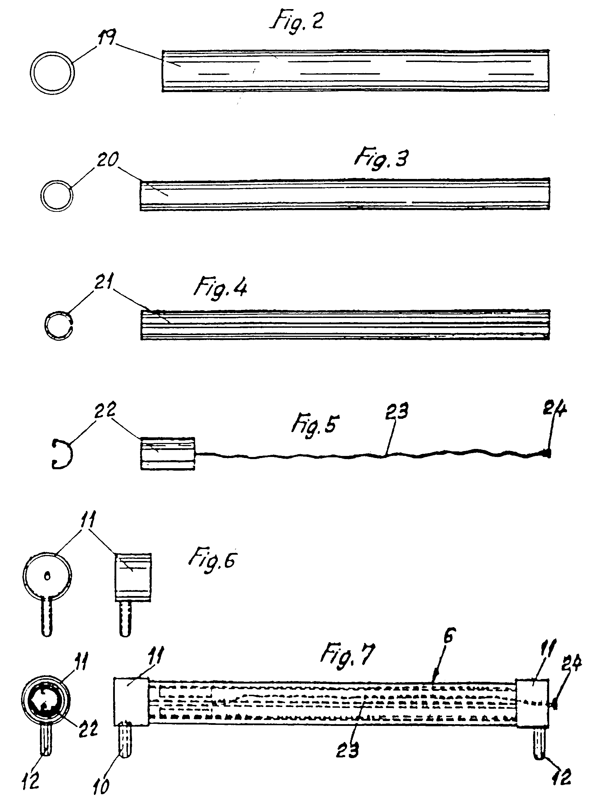

Figure 2 shows a front view and a longitudinal projection of a tempered glass, "pyrex" type pipe, to be mounted in the interior of the stainless steel pipe in Figure 2, leaving a chamber between the glass and the steel tube where the ozone gas will be stored to be later absorbed by the Venturi pipe system.

Figure 4 shows a front view and a longitudinal projection of the stainless steel sheet or rolled grid, housed inside the tempered "pyrex" type glass, for a homogeneous dielectric effect to be obtained.

Figure 5 shows a front view and longitudinal projection of the contact mechanism for the electrical discharge, which is housed inside the stainless steel sheet shown in Figure 4.

Figure 6 represents a front and side view of one of the sockets or end plugs of the generator with a channel or slot for the intake of air at one end and the ozone outlet at the other.

Figure 7 represents the profile and longitudinal projection of the whole generator assembly with the parts from figures 2, 3, 4, 5 and 6.

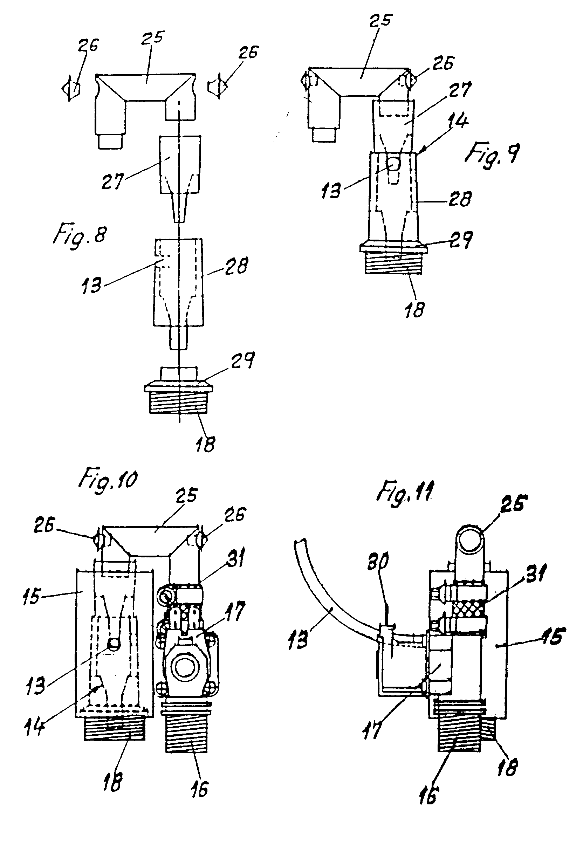

Figure 8 shows a general elevated projection of the different parts that comprise the Venturi pipe type accelerator, projected on the mounting axis.

Figure 9 represents a general projection of the Venturi pipe accelerator, totally mounted.

Figure 10 shows a general elevated sample of the water intake assembly to the Venturi pipe accelerator, by means of a manually operated electrovalve.

Figure 11 shows an elevated side view of the assembly indicated in Figure 10.

Figure 12 shows an elevated front view of the Venturi pipe, installed with an automatic water system using a pressostat.

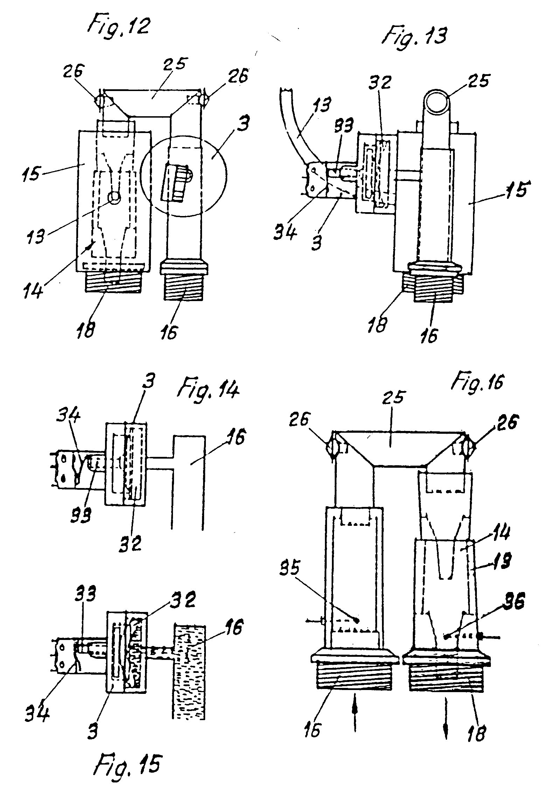

Figure 13 shows an elevated side view of the assembly of Figure 12, with automatic functioning through pressure of the waterflow.

Figure 14 shows an elevated detailed drawing of the pressostat mechanism when there is no water pressure and therefore, it has not been activated by the electric circuit.

Figure 15 shows the same detailed elevated view of Figure 14 but with the waterflow pressure working and the electric circuit connected to activate the ozone generating equipment.

Figure 16 shows a front elevated view of the Venturi pipe accelerator, between the outlet and intake of water, incorporating internal electric contacts which act by conductivity and through the waterflow.

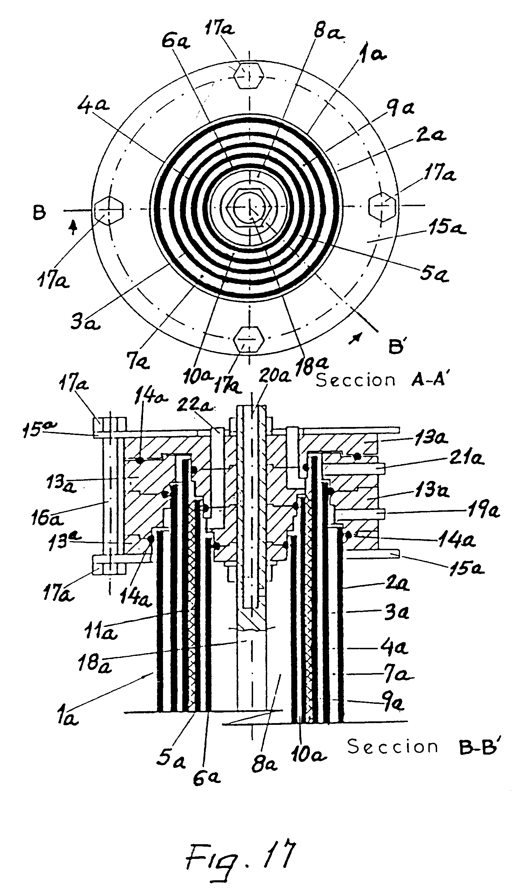

Figure 17 shows a plan and a profile of the variant of the ozone generator with concentric multiple chambers, mounted inside each other, and forming between them a central chamber provided with floodable chambers and with air chambers, as well as a central chamber optionally equipped with a metallic grid, water or other suitable conductor, connected to a high tension electrical circuit. In the air chambers, the ozone is produced and sent to the accelerator which produces the mixture with drinking water from the supply, by means of the Venturi effect, and the treated water leaves the accelerator to a conduct or jet for use.

To understand more fully the different mechanisms and parts of the ozonized water generator for sterilization and ozonotherapy, all parts have been referenced by number in the following order:
Reference (1) indicates the intake of electrical current for the start-up of the equipment which takes place by pressing switch (2) or in the case of a generator adapted to a shower fitting, it will automatically start functioning due to water pressure and the pressostat (3) will act automatically.

The switch (2) or the pressostat (3) lets the current pass to the transformer (4), the outlet for the high tension (5) which is applied to the ozone generator (6) for the conversion of the air received from the dryer or filter (7) to ozone. This air is introduced via the nozzle (8) and leaves by nozzle (9) which is connected to the conduit (10) situated in one of the sockets or plugs (11) at each end of the ozone generator through the conduit (12) situated in the plug (11) at the opposite end. It will then go through the end (13) to the venturi accelerator (14) conveniently protected by the circular pipe (15) filled with quartz dust and the water intake will come through conduct (16) to the venturi accelerator, (14) from the pressostat (3)or alternatively, by means of the electrovalve (17) to start its function and finally go through the jet or tap (18) for consumption or use.

The ozone generator assembly (6) is housed inside the hermetic hollow metallic cylindrical receptacle (6') , to prevent anybody touching the high tension connections which are to be found in the sockets or plugs(11).

The ozone generator assembly (6) comprises a stainless steel pipe (19), in some cases, several to increase the ozone producing capacity (See figure 17) and in its interior it houses a tempered "pyrex" type glass pipe (20) leaving a chamber between the glass and the steel tube which is where the ozone gas is stored to be later absorbed by the venturi pipe system (14). There is a rolled sheet of stainless steel (21) housed within the glass (20) to achieve a homogeneous dielectic effect in the interior of the sheet (21) in the contact mechanism (22) equipped with the filament (23) and ending in the pivot (24) mounted on the plug or socket (11) for the outlet of ozone gas through the conduit (12) to the accelerator.

The venturi assembly or accelerator (14) comprises a connection pipe (25) between the intake of water coming from the electrovalve (17) or should the case be, from the pressostat (3), and has end plugs (26) which close this conduit incorporating an upper nozzle (27) for the intake of water under pressure, situated on the upper part, the nozzle of which is incrusted in the body (28) which has an inlet (13) for the ozone produced in the generator (6)The acceleration and the molecular mix of water-ozone is produced and connected to the venturi tube assembly, to the lower part (29) with a final coil to connect or rise up to the tap (18) for the outlet of ozonized water.

In the application of the water intake conduit by means of the electrovalve (7), the system is activated by a manual switch (3)) in the equipment and the electrovalve (17) is mounted across the connection (31). The intake of water takes place in the lower part of the electrovalve (17), following the circuit to the Venturi accelerator.

In the application of the water intake conduit by means of the pressostat (3) this operation takes place automatically and the water pressure displaces the elastic membrane (32), equipped with pivot (33) which in repose (figure 14) does not act upon the microinterruptor (34) whereas when the flow of water acts upon the membrane (32) the pivot (33) closes the microinterruptor circuit (34) (figure 15), establishing the electric circuit to the generator (6) and as a result, the water and ozone obtained for mixing reach the accelerator.

Between the water inlet (16) and the outlet at the end (18) through the Venturi pipe (14), the internal electric contacts can be incorporated, one of which (35) is beside the inlet and the other (36) beside the outlet coming from the venturi (14) so that the actual waterflow establishes a circuit by conductivity, and puts the full equipment into use.

The variant of the ozone generator with concentric multiple chambers, depicted in figure 17, uses its own alphanumerical code in reference to its different components, so that they can be differentiated from the single pipe type of generator which we have previously described in detail. Figure 17 specifically depicts the transversal section A-A' of an elevated longitudinal projection of the ozone generating element comprising several concentric quartz pipes of different diameters with separating chambers, with all pipes mounted at both ends on insulated mounting blocks.

This view enables us to see the concentric arrangement and the mounting block at one end.

Reference (1a) shows the actual ozone generator, comprising the concentric quartz pipes (2a), (3a), (4a), (5a) and (6a) in variable number, all of them having different diameters so that they fit one inside another, thus leaving the floodable chambers (7a) and (8a), alternating with the ozone producing air chambers (9a) and (10a). The central chamber is optionally equipped with a metallic grid (11a), water, graphite or another suitable conductor, connected to the wave and high tension generator (12a) to enable the production of ozone.

The set of concentric pipes (2a), (3a), (4a), (5a), (6a), etc. is mounted at the ends to the insulating blocks (13a) equipped with tonic couplings(14a), hermetically closed, and forming blocks between the sheets of stainless steel (15a) and across the dowel screws (16a) and fastening nuts (17a), with a centre bar (18a) to support the equipment assembly.

The floodable chambers (7a) and (8a) are equipped respectively with conduits (19a) and (20a), whereas the air chambers (9a) and (10a) likewise have conduits (21a) and (22a) connected by means of a tubular conduit coming from the air dryer and corresponding to a membrane air compressor provided with a filter to ensure that the air received is completely dirt-free.

The drinking water from the supply will pass through an electrovalve, to the accelerator, causing a venturi effect, there being a distributor included in the hydraulic system, fitted with a nozzle which supplies a fine flow of water through a conduit to the ozone generator. It includes an accelerator and tubular conduits so that the conduit receives the ozone produced by the generator (1a).

It has not been considered necessary to give a fuller description for an expert on the subject to understand its scope and its advantages.

However, the possibility should be underlined of the different parts being manufactured in a variety of materials, sizes and forms,; several generators could be incorporated to increase the ozone producing capacity and certain constructive variations could be included, that might be recommendable in their manufacture, provided that said variations did not modify the essential nature of the aims of the present invention patent.

## Claims

1. The OZONIZED WATER GENERATOR FOR STERILIZATION AND OZONOTHERAPY is essentially characterized by the fact that the ozone generating equipment comprises one or more stainless steel pipes which comfortably house in their interior a cylindrical tempered glass pipe, leaving a surrounding air chamber between both where the ozone gas is stored, to be absorbed later by the accelerator system. Inside the glass pipe, there is a steel sheet or grid or a stainless steel grid, suitably adjusted and duly rolled up to obtain a homogeneous dielectic effect. In its interior, there is a contact mechanism for the high tension electric discharge mounted between two sockets or end plugs at each end of the generator and which have channels or conduits; one of these is for air intake and the other for the oulet of the ozone gas obtained.

2. The OZONIZED WATER GENERATOR FOR STERILIZATION AND OZONOTHERAPY as per point 1, is essentially characterized by the fact that the ozone produced by the generator is led to an accelerator mechanism by means of the venturi system in the central body of the same and this accelerator incorporates in its upper part, a pipe or intake conduit from the supply network, with the interposition of an electrovalve, a pressostat or internal electric contacts which act through conductivity. The upper part of the venturi is incrusted in the central body with an inlet nozzle for water under pressure within the central body of the venturi, where it is mixed with the ozone gas after being absorbed by the visturi effect, producing an acceleration of the water and a triatomic mix of the water and the ozone. due to the venturi mechanism's tendency to separate the water molecularly, thus obtaining a homogeneous water and ozone fusion which goes out below via a ring-shaped conduit up to the jet or outlet of ozonized water. The venturi accelerator is protected by an exterior cylindrical tube filled with quartz dust to ensure its permeability.

3. The OZONIZED WATER GENERATOR FOR STERILIZATION AND OZONOTHERAPY, as per point 2 is essentially characterized by the pressostat incorporated between the water intake conduit and the venturi accelerator, equipped with an automatic electric connection to the circuit , and fitted with an elastic membrane housed inside the conduit and a displaceable pivot. Said membrane is activated by the pressure of the waterflow and when the pivot is displaced, it acts upon the microinterruptor which establishes the electric circuit.

4. The OZONIZED WATER GENERATOR FOR STERILIZATION AND OZONOTHERAPY, as per point 2, is essentially characterized by the fact that it includes an integrated electrovalve between the water intake circuit and the venturi accelerator; said electrovalve incorporates a manually operated switch whose action permits water to enter the electrovalve and the supply of electricity to the generator circuit for the production of ozone.

5. The OZONIZED WATER GENERATOR FOR STERILIZATION AND OZONOTHERAPY, as per point 2, is essentially characterized by the fact that in the interior of the water intake conduit and in the interior of the outlet conduit, following the venturi accelerator, it is equipped with electric contacts between which a circuit is established through the waterflow which acts by conductivity.

6. The OZONIZED WATER GENERATOR FOR STERILIZATION AND OZONOTHERAPY, as per point 1, is characterized by the fact that the ozone generator equipment is installed inside a hermetic hollow cylindrical metal receptacle, in order to avoid any possible contact by users or operators with the high tension connections.

7. The OZONIZED WATER GENERATOR FOR STERILIZATION AND OZONOTHERAPY, as per point 1, is characterized by the fact that the ozone generator can be equipped with concentric multiple chambers, defined by a number of quartz pipes of varying diameters, all joined concentrically at their ends to insulating blocks or sockets designed to house the ends, creating between the concentric pipes surrounding chambers which can be either filled with ozone-producing air, or can be flooded for refrigeration purposes. They can even be used as conductors by means of a metallic grid, water, graphite or other material of suitable qualities, thus producing a high proportion of ozone to be mixed with drinking water from the water supply, to obtain treated water by producing the mixture in the accelerator mechanism by means of the venturi effect, incorporated for that purpose and connected to a hydraulic and electric circuit.
